# EUROPEAN PATENT APPLICATION

(11) **EP 4 821 764 A1**
(43) Date of publication of application: **14.10.2026**
(21) Application number: 25171411.9
(22) Date of filing: 17.04.2025
(51) Int. Cl.: B60R 9/06, F16B 2/18

(54) **CLAMPING DEVICE, LUGGAGE BOX AND SYSTEM**

(30) Priority: 10.04.2025 CN 202510449909
(71) Applicant: Carman Enterprise Co., Ltd, Hangzhou 311121 (CN)
(72) Inventor: Li, Shouyang, Hangzhou, 311121 (CN)
(74) Representative: Paul & Albrecht Patentanwälte PartG mbB

(57) **Abstract**

The present invention relates to a clamping device (20) for bracing a load receiving device, in particular a luggage box (1), to a load carrier (9), in particular a bike carrier, said clamping device (20) comprising
a clamping lever (21);
a pivot joint (22), which is rotatably held at an end section (29) of the clamping lever (21) about a rotation axis (R);
an elongated clamping pin (23), which is fixed to the pivot joint (22) and extends perpendicularly to the rotation axis (R) of the pivot joint (22), the clamping pin defining a longitudinal axis (X);
a clamping element (26) fixed to the clamping pin at an end section (29) thereof.

## Description

The present invention relates to a clamping device for bracing a load receiving device to a load carrier, said clamping device comprising a clamping lever, a pivot joint, which is rotatably held at an end section of the clamping lever about a rotation axis, an elongated clamping pin, which is fixed to the pivot joint and extends perpendicularly to the rotation axis of the pivot joint, the clamping pin defining a longitudinal axis, a clamping element fixed to the clamping pin at an end section thereof, wherein the clamping lever has a clamping surface and the clamping element has a pressure surface, so that, preferably, a load receiving device can be clamped to a load carrier between the clamping surface and the pressure surface.

Furthermore, the present invention relates to a luggage box, in particular for releasable attachment to a load carrier to be mounted to a vehicle, the luggage box comprising a rigid bottom element and attachment means in order to attach the luggage box releasably to the load carrier, wherein, preferably, the attachment means comprise at least two, in particular four through-openings formed in the bottom element.

In addition, the present invention relates to a system comprising a luggage box and a load carrier, in particular a bike carrier.

Load carriers for fastening to the rear end of a vehicle, in particular a motor vehicle such as a car, are often used for transporting loads that do not fit into the luggage compartment of the vehicle. Generally, such a load carrier comprises a connecting device at its front end region which is normally designed so that the load carrier can be fastened to the ball of a conventional trailer coupling.

Such load carriers can carry a luggage box, by means of which additional luggage which exceeds the capacity of the luggage compartment of a vehicle can be transported. Such a luggage box is normally characterized in that it is closed, thus defining an interior luggage space in order to protect the luggage to be transported against dirt and water. Such a luggage box is for example disclosed in EP 4 289 673 A1. This luggage box comprises a rigid bottom element, which can be placed above profile rails of a rear load carrier. In order to attach the luggage box releasably to the rear load carrier, a plurality of through-openings are formed in the bottom element. Clamping devices are provided which are arranged and designed to brace the luggage box to the rear load carrier. In concrete terms, the clamping devices can be brought into engagement with a corresponding T-shaped groove formed in the profile rails of the rear load carrier.

Such an attachment has proven itself in principle. However, there is always a need to improve the attachment to a load carrier as a load receiving device must be fixed stable in order to remain on the load carrier even if a vehicle drives on bumpy roads.

Accordingly, it is a task of the present invention to provide an alternative clamping device and an alternative luggage box, which in particular can be used in a very flexibly and which preferably can be attached in a reliable and safe manner at a load carrier.

This object is solved by a clamping device mentioned at the beginning in that the pressure surface is spaced apart from the clamping pin.

The invention is based on the consideration to provide a clamping device with a clamping element, which is held at a clamping pin and wherein the pressure surface, which is used for bracing the load receiving device, in particular a luggage box, to a load carrier, is spaced apart from the clamping pin. In this way, it is possible that the clamping pin extends in front or behind from a wheelholder or a profile rail of the load carrier and the pressure surface can engage below the profile rail. In other words, the clamping element can extend from a lateral side below the profile rail of a load carrier, so that it is not necessary that the clamping element engages or fits into a specific T-shaped groove. In this way, the clamping device can be used in connection with load carriers which do not have such a specific profile rail.

It should be noted that the terms "in front" or "behind" refer to a clamping device or a load receiving device such as a luggage box in the attached state, i.e. when the device is attached to a load carrier, which itself is attached to a vehicle. The driving direction of the vehicle corresponds in this case to a front direction. Preferably, the load carrier is not a part of the claimed clamping device and/or of the claimed luggage box. Preferably, the load receiving device is not a part of the claimed clamping device.

According to a preferred embodiment, the pressure surface is arranged at an end section of the clamping element. In other words, the pressure surface may be arranged as far as possible away from the clamping pin. The pressure surface may be elevated with respect to an adjacent section of the clamping element. Preferably, the pressure surface extends at least substantially perpendicularly to the longitudinal axis of the clamping pin.

In particular in order to reduce the bending stress of the clamping element and in the clamping pin, the clamping element may comprise a support surface to support the clamping element against a load receiving device, in particular against the bottom of a luggage box. In concrete terms, the support surface may extend at least substantially perpendicularly to the longitudinal axis of the clamping pin. The support surface may be spaced apart from the clamping pin and/or may be arranged on an opposite lateral side with respect to the clamping pin of the pressure surface. In other words, on one side of the clamping pin, the pressure surface may be arranged, whereas at the other side of the clamping pin, the support surface may be arranged. In this way, the clamping element may act like a lever, wherein the support surface abuts against the load receiving device, in particular against the bottom of a luggage box, and the clamping pin pulls the pressure surface against the load carrier, in particular against a profile rail of the load carrier. Preferably, the distance between the pressure surface and the longitudinal axis of the clamping pin is at least two times and/or at most four times the distance between the support surface and the longitudinal axis of the clamping pin. Accordingly, support surface is positioned closer to the clamping pin than the pressure surface.

The clamping element may be formed as a bent sheet part, in particular a bent metal sheet part. The clamping element may comprise a flat middle section through which the clamping pin extends. The clamping pin may penetrate longitudinally through the clamping element. The clamping element may be fixed at the clamping pin. In concrete terms, a form-fit connection and/or a force-fit connection and/or positive substance connection may be provided. In concrete terms, the clamping pin and the clamping element may be welded together. In particular, the clamping element can be fixed to the clamping pin in a rotationally fixed manner so that the clamping element cannot be rotated relative to the clamping pin about the longitudinal axis.

At one end of the middle section, the pressure surface may be arranged, and at the other end of the middle section, the support surface may be arranged.

More in detail, at the other end of the middle section, an end section may extend upwards in the shape of an L, when seen from a lateral side. A first L-leg may extend upwards from the middle section and a second L-leg may extend parallel to the middle section. Preferably, the second L-leg is arranged such that it overlaps with a middle section, in particular when seen from above. The upper side of the second L-leg may form the support surface.

The clamping lever may be moveable relative to the clamping pin between a release position, in which the clamping pin extends at least substantially in the same direction as the clamping lever, and a clamping position, in which the clamping pin extends at least substantially perpendicularly to the direction of the clamping lever. For this purpose, the clamping lever may comprise at the end section of the pivot joint a through-slot which divides the clamping lever so that the elongated clamping pin can rotate freely about the rotation axis of the pivot joint relative to the clamping lever. Preferably, the arrangement is such that the elongated clamping pin cannot rotate about its longitudinal axis with respect to the clamping lever. In other words, it may be provided that the clamping pin and the clamping lever rotate synchronously about the longitudinal axis of the clamping pin. In concrete terms, the elongated clamping pin can be fixed to the pivot joint such that it cannot rotate about its longitudinal axis relative to the pivot joint.

In order to clamp a load receiving device to a load carrier, the clamping lever may comprise a clamping surface, which extends parallel to the rotation axis of the pivot joint and is spaced apart from the pivot joint such that the load receiving device and the load carrier are pressed together between the pressure surface and the clamping surface when the clamping lever is moved from its release position into the clamping position and the clamping surface comes into contact with a corresponding holding surface of the load receiving device to be attached. In other words, the clamping surface of the clamping lever is spaced apart from the pivot joint such that the load receiving device, in particular a bottom wall, and the load carrier, in particular a profile rail or a wheelholder, are clamped together between the pressure surface and the clamping surface of the clamping lever. Accordingly, the distance between the clamping surface and the pressure surface may be chosen such that the underside of a profile rail of the load carrier and a holding surface of the load receiving device can be clamped together.

The object of the invention is also solved by a luggage box mentioned at the beginning which comprises at least two, in particular four clamping devices as described above.

In concrete terms, the clamping pin of each clamping device may extend through a through-opening formed in the rigid bottom element. In other words, the luggage box may comprise a plurality of through-openings formed in the rigid bottom element. A clamping device as described above is assigned to each through-opening. The rigid bottom element may comprise clamping metal sheets, in particular in the form of elongated metal sheets, which are arranged around the through-openings in order to abut against the clamping lever.

Adjacent to each through-opening, a deepening may be provided in the bottom of the luggage box, which receives the clamping lever of the clamping device, when the clamping lever is brought into its clamping position. This deepening may form a holding surface. The holding surface may be formed by the clamping metal sheets. Guiding projections may be formed in the holding surface in order to avoid an unintentional rotation of the clamping device when the clamping lever is in its clamping position and the clamping surface of the clamping lever is in contact with the holding surface.

The luggage box may comprise a rigid cover element and sidewalls connecting the bottom element and the cover element, thus forming a luggage space inside.

According to a further aspect of the invention, the task mentioned above is also solved by a luggage box, in particular for releasable attachment to a load carrier to be mounted to a vehicle, wherein the luggage box comprises rigid bottom element, a rigid cover element and sidewalls connecting the bottom element and cover element, thus forming a luggage space inside, wherein the luggage box comprises a holding arrangement, which is designed such that it can be connected to a yoke of a load carrier, wherein the holding arrangement comprises a base element held at the sidewall or the cover element of the luggage box and having a yoke receiving space opened towards the bottom to receive a yoke of a bike carrier, and a securing element, which is held moveably at the base element between a securing position, in which a yoke inserted in to the yoke receiving space is fixed in a form-fit manner therein, and a release position, in which the yoke can be inserted into or removed out of the yoke receiving space.

This embodiment is based on the consideration to additionally stabilize the fixation of the luggage box at a load carrier and to create a reliable and mechanically stable fixation. In concrete terms, the securing element may extend substantially horizontally in its securing position thus preventing the holding arrangement and a luggage box to loosen from the yoke of a load carrier. The securing element may extend substantially vertically towards the bottom, when it is in its release position, so that the luggage box can be moved such that the yoke is removed out of the yoke receiving space or inserted therein.

In concrete terms, the base element may comprise a main section, which is attached to the sidewall or to the cover element of the luggage box, and an outer wall, wherein the yoke receiving space is arranged between the main section and the outer wall. Preferably, the receiving space is limited upwardly by means of an upper bar, which connects the main section and the outer wall. In other words, the yoke receiving space open towards the bottom can be limited in a front or rear direction on one side by the main section and to the other side by the outer wall. Upwardly, the yoke receiving space may be limited by means of an upper bar, which connects the main section and the outer wall. In this way, the luggage box can pe positioned from the top on a load carrier so that the yoke engages into the base element, in concrete terms into the yoke receiving space. In other words, the yoke can be arranged between the main section and the outer wall and below the upper bar. Consequently, the securing element may overbridge the yoke receiving space from the bottom between the main section and the outer wall.

Preferably, the securing element is held at the main section and the outer wall comprises a holding slit extending in the vertical direction. The holding slit may be open towards the bottom in order to move the securing element between the securing position and the release position. The securing element may engage through the holding slit when it is moved into its securing position.

The arrangement may be such that the securing element must be moved at first translationally out of its securing position before the securing element can be pivoted into its release position. In concrete terms, the base element may comprise a holding groove, which extends vertically and is not open towards the bottom, so that the securing element can engage into the holding groove in particular with an enlarged end section in its securing position and so that the securing element must be moved translationally in particular in an horizontal direction out of its securing position before the securing element can be pivoted towards its release position. The holding groove may be arranged in the outer wall and may extend on both lateral sides of the holding slit.

The securing element may be designed as a securing pin and can be formed by or comprise a screw. An enlarged end section can be a knob, which is preferably screwed onto the thread of the screw.

According to a preferred embodiment, the securing element may be biased towards its securing position, in particular by means of a spring element, preferably by means of a coil spring. The spring element preferably supports against a head of the securing element arranged in the main section of the base element and against the base element. In this way, it is ensured that the securing element must be moved translationally against the restoring force of the spring element in order to bring the enlarged end out of engagement from the holding groove. After having done so, the securing element can be pivoted into its release position.

According to a further aspect of the invention, the task mentioned above is also solved by a luggage box, in particular for releasable attachment to a load carrier to be mounted to a vehicle, wherein the luggage box comprises a rigid bottom element, a rigid cover element and sidewalls connecting the bottom element and the cover element, thus forming a luggage space inside, wherein the cover element can be moved, in particular pivoted, between an open state and a closed state, wherein the luggage box comprises blocking means in order to block the cover element in its closed state, wherein the blocking means comprise at least one locking belt, in particular two locking belts, held at the sidewall, in particular at a rear wall of the sidewall, and, assigned to each locking belt, a counter belt held at the cover element, wherein each locking belt can be connected to the corresponding counter belt by means of a snap fit. Such a connection is often used at backpacks to keep them closed.

Preferably, the sidewalls of the luggage box are made of fabric. The luggage box may be foldable between a use configuration, in which the bottom element and the cover element are spaced apart from one another and the sidewalls connect the bottom element and the cover element, thus forming a luggage space inside, and a transport configuration, in which the cover element lies on the bottom element and the sidewalls are folded in between the cover element and the bottom element. For example, the folding mechanism can be arranged as it is described in EP 4 289 673 A1.

The task underlying the invention is also solved by a system comprising a luggage box as described above and a load carrier, in particular a bike carrier, wherein the load carrier defines a longitudinal direction and comprises at least two, in particular exactly two rails extending in a transverse direction for receiving a load, in particular for receiving at least one bike, on the load carrier, wherein the arrangement is such that the luggage box can be attached to the load carrier in such a way that the bottom element of the luggage box is positioned on the rails and the respective pressure surface of the clamping devices abuts from below against the rails in order to brace the luggage box against the rails of the load carrier. In other words, it may be provided that the rails are arranged between the pressure surfaces of the clamping devices and the bottom element of the luggage box. The rails may be spaced apart from each other in such a way that the elongated clamping pins of the clamping devices are arranged in the longitudinal direction between the rails. In concrete terms, two clamping devices may be arranged in proximity to a front rail and two clamping devices are arranged in proximity to the rear rail.

The load carrier may comprise a yoke, which may extend upwards in order to support a load. Such a yoke can be used at a bike carrier to support the frame of a bike. The luggage box may comprise a holding arrangement as described above, which is designed such that can be connected to the yoke of the load carrier. The yoke may have the shape of an U, wherein the ends of the yoke carrier are held at the base body of the load carrier.

The load carrier may be a rear load carrier in particular for attachment to a vehicle-side trailer coupling. For this purpose, the load carrier may comprise at its front end a connecting device for attachment to a vehicle-side trailer coupling. The load carrier may comprise a base body which holds the at least two rails. At its rear end, the load carrier may comprise a license plate holder and two rear light units arranged on opposite lateral sides of the license plate holder.

With regard to the embodiment of the invention, reference is also made to the subclaims and to the following description of an embodiment with reference to the attached drawing. The drawing shows as follows:
- Figure 1: a luggage box according to the invention in a perspective view;
- Figure 2: a bike carrier on which the luggage box of figure 1 can be mounted;
- Figure 3: a clamping device according to the invention;
- Figure 4: the luggage box of figure 1 mounted on the load carrier of figure 2;

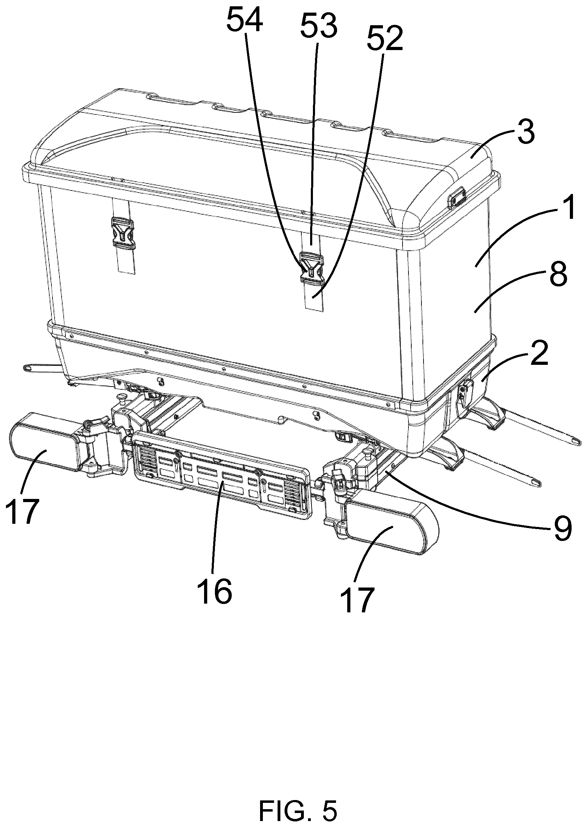

- Figure 5: the arrangement of figure 4 in another perspective view;
- Figure 6: a partial perspective view of the bottom region of the luggage box of figure 1;
- Figure 7: the bike carrier and the luggage box shown in figure 4 in a perspective view from the bottom;
- Figure 8: the bike carrier and the luggage box of figure 4 in a partial cross-sectional view;
- Figure 9: the bike carrier of figure 4 in another partial perspective view, wherein the clamping lever of the clamping devices are in their release position;
- Figure 10: the arrangement shown in figure 9 in another perspective view;
- Figure 11: the holding arrangement of the luggage box of figure 1 in a perspective view;
- Figure 12: the holding arrangement shown in figure 11 in another perspective view, wherein the securing element is in its release position; and
- Figure 13: the holding arrangement shown in figure 11 in a cross-sectional view, wherein the securing element is in its securing position.

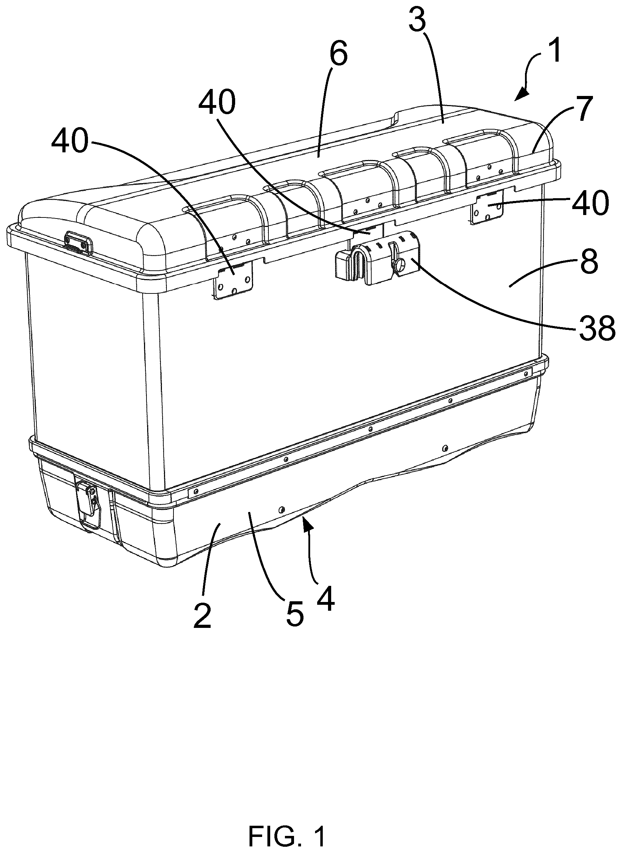

Figure 1 shows a luggage box 1 according to the invention. The luggage box 1 has a rigid bottom element 2 and a rigid cover element 3, both basically made of plastic. The bottom element 2 comprises a bottom plate 4 and a circumferential border 5 facing upwards. In the same manner, the cover element 3 comprises a cover plate 6 of a substantially rectangular shape and a circumferential border 7 facing downwards. Furthermore, the luggage box 1 has sidewalls 8 made of a watertight fabric.

The luggage box 1 is foldable between a use configuration shown in figure 1 and a transport configuration, which is not shown in detail. In the use configuration, the bottom element 2 and the cover element 3 are spaced apart from one another and the sidewalls 8 connect to the bottom element 2 and the cover element 3, thus forming a luggage space inside. In the transport configuration, the cover element 3 lies on the bottom element 2 and the sidewalls 8 made of fabric are folded in between the cover element 3 and the bottom element 2 in order to allow a space-saving transport and storage of the luggage box 1.

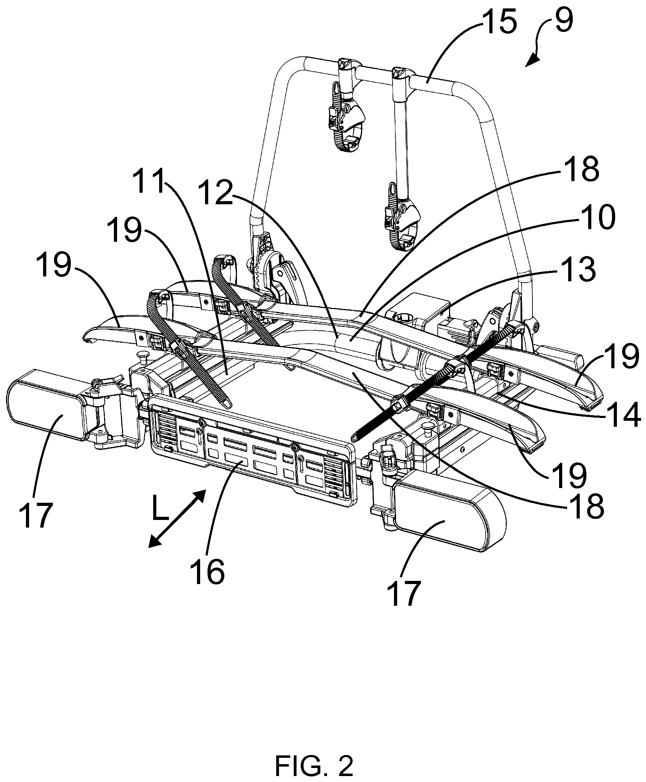

Figure 2 shows a load carrier 9. The load carrier 9 comprises a base body 10, which has the shape of a C open towards the rear side and comprises two base profiles 11 extending in a longitudinal direction L. The base profiles 11 are, at their front end, connected to each other by means of a central section 12 of the base body 10. At the central section 12, a connecting device 13 for attachment to a vehicle-side trailer coupling is provided.

The rear load carrier 9 further comprises two sliding profiles 14, which are held at the base profiles 11 and can be moved relative to them in the longitudinal direction L. At the front end of the sliding profiles 14, a yoke 15 is attached in order to support a load to be transported in the load carrier 9. The yoke 15 has the shape of a U open towards the bottom and is attached to the sliding profiles 14 such that it can be moved relative to them between an upright position and an at least substantially horizontal position. At the rear end of the sliding profiles 14, a license plate holder 16 and two rear light units 17 are attached.

The rear load carrier 9 comprises fixing means in the form of two rails 18, which extend in the transverse direction and which are fixed to the sliding profiles 14. The rails 18 are spaced apart from each other in the longitudinal direction. At both ends of each rail 18, a wheel holder 19 to fix a wheel of a bike to be transported is provided. The rails 18 are inclined downwardly towards their lateral ends, so they reach a maximum altitude in their middle section.

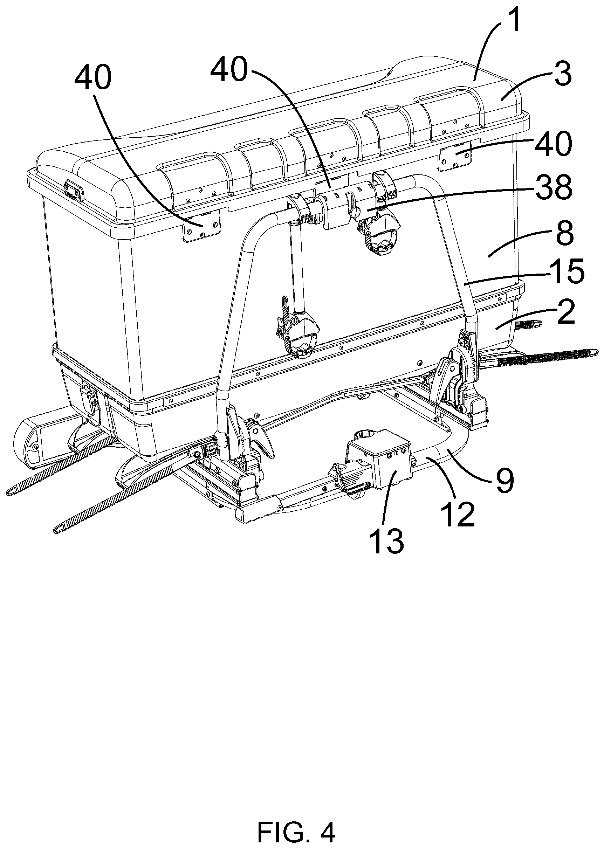

Figure 4 shows how the luggage box 1 is fixed to the load carrier 9. In concrete terms, the bottom element 2 lies on the rails 18 of the load carrier 9.

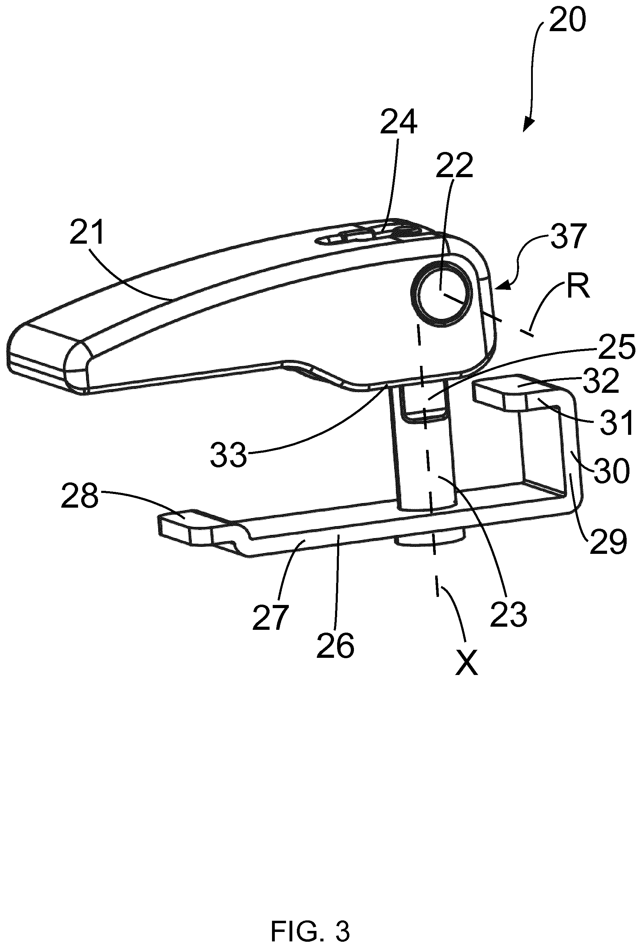

In order to fix the luggage box 1 on the load carrier 9, the bottom element 2 is braced against the rails 18. For this purpose, in total four clamping devices 20 are provided, which are shown as a separate component in figure 3. The clamping device 20 shown in figure 3 comprises a clamping lever 21. Furthermore, the clamping device 20 comprises a pivot joint 22, which is held rotatably at an end section of the clamping lever 21 about a rotation axis R. The clamping device 20 further comprises an elongated clamping pin 23 defining a longitudinal axis X. The clamping pin 23 is fixed to the pivot joint 22 and extends perpendicularly to the rotation axis R of the pivot joint 22. In concrete terms, according to a preferred embodiment, the clamping pin 23 is held in a rotationally fixed manner at the pivot joint 22. In order to allow a rotation of the clamping pin 23 about the rotation axis R, the clamping lever 21 comprises at the end section a through-slot 24 which divides the clamping lever 21 so that the elongated clamping pin 23 can rotate freely about the rotation axis R of the pivot joint 22 relative to the clamping lever 21. Flattenings 25 are provided at an upper end section of the elongated clamping pin 23 so that the clamping pin 23 fits into the through-slot 24 of the clamping lever 21.

The clamping device 20 further comprises a clamping element 26, which is formed as a bent metal sheet part. The clamping element 26 is fixed to the clamping pin 23 at an end section thereof in a rotationally fixed manner. The clamping element 26 has a flat middle section 27 through which the clamping pin 23 extends. At one end of the middle section 27, a pressure surface 28 is arranged, wherein the pressure surface is elevated with respect to the middle section 27 and extends at least substantially perpendicularly to the longitudinal axis X of the elongated clamping pin 23.

At the other end of the middle section 27, an end section 29 extends upwards in the shape of an L, when seen from the lateral side. A first L-leg 30 extends upwards from the middle section 27 and a second L-leg 31 extends parallel to the middle section 27. The second L-leg 31 overlaps with the middle section 27 partially, when seen from above. The upper side of the second L-leg 31 forms a support surface 32 to support the clamping element 26 against the bottom side of the luggage box 1. The support surface 32 extends parallel to the pressure surface 28 and, preferably, the distance between the pressure surface 28 to the longitudinal axis X is about three times the distance between the support surface 32 and the longitudinal axis X.

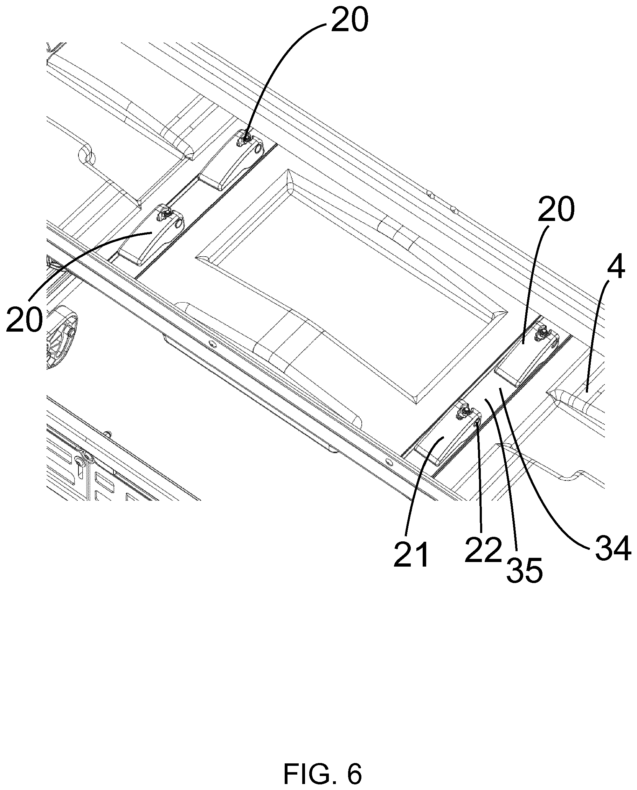

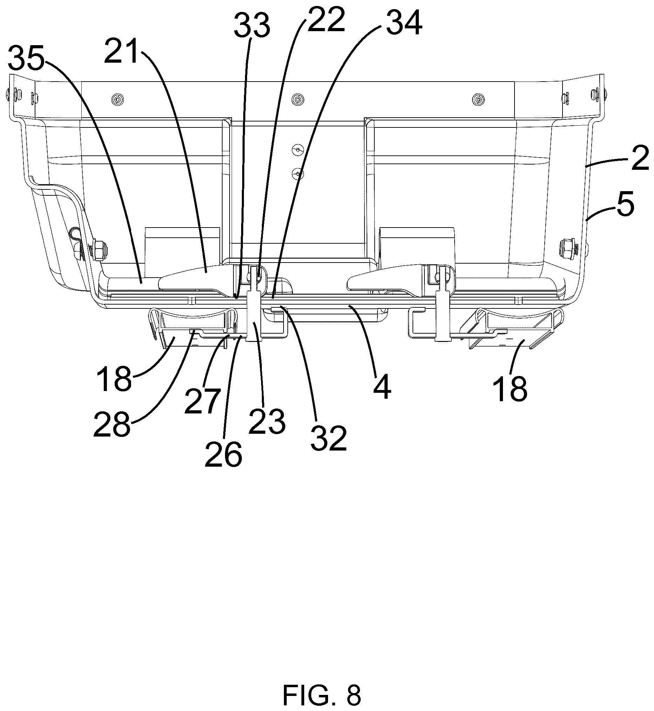

The clamping lever 21 has a clamping surface 33, which is in the situation shown in figure 3 arranged on the bottom side of the clamping lever 31. In this way, the luggage box can be clamped to the load carrier 9 between the clamping surface 33 and the pressure surface 28. This situation shown for example in figures 6 to 8, in which the pressure surface 28 of each clamping device 20 abuts against the rails 18 from the bottom.

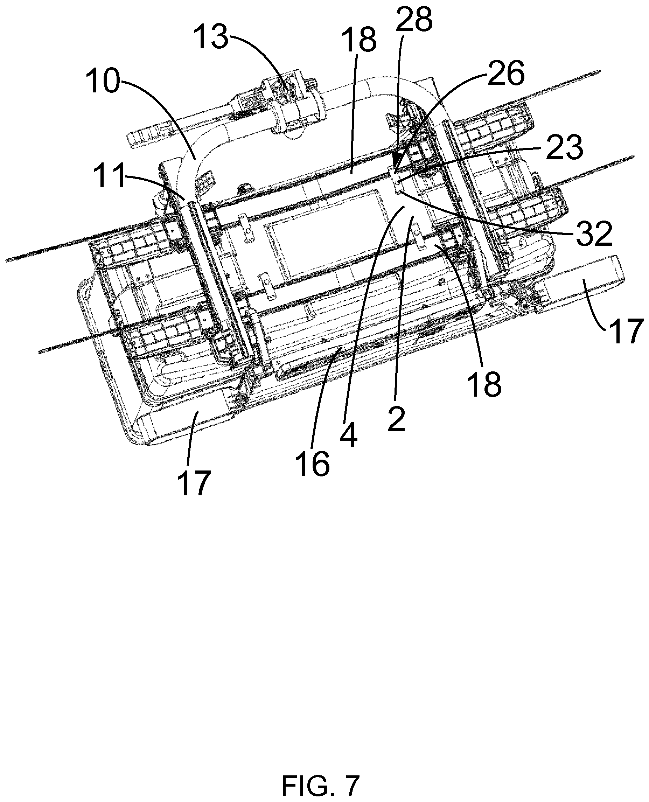

As it is visible for example in figure 7, the clamping devices 20 are arranged between both rails 18 so that the clamping pins 23 of the clamping devices 20 are arranged in the space between the rails 18. In other words, the clamping elements 26 engage under the rails 18 from the inner space arranged between the rails 18.

The support surfaces 32 of the clamping devices 20 abut against the underside of the bottom element 2 of the luggage box 1. The clamping surface 33 of the clamping lever 21 lies against the upper side of the bottom element 2, i. e. inside the luggage box 1. For this purpose, specific elongated metal sheets 34 are provided in corresponding deepenings 35 formed in the bottom element 2 forming a holding surface which can be in contact with the clamping surface 33 of the clamping lever 21. The elongated clamping pins 23 extend through through-openings 36 formed in the bottom element 2 of the luggage box 1. The pressure surfaces 28 of the clamping devices 20 lie from the underside against the rails 18. In this way, the luggage box 1 is braced against the rails 18 of the load carrier 9.

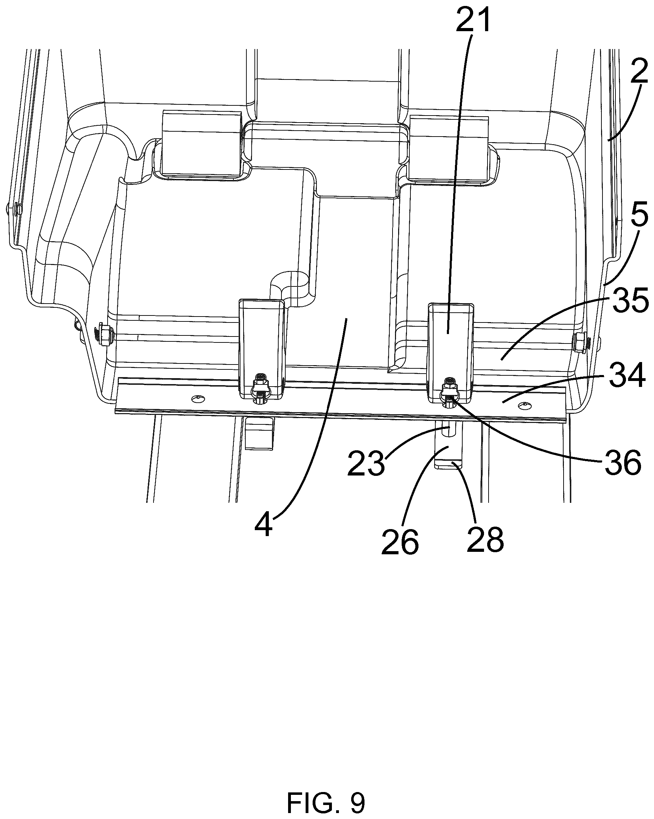

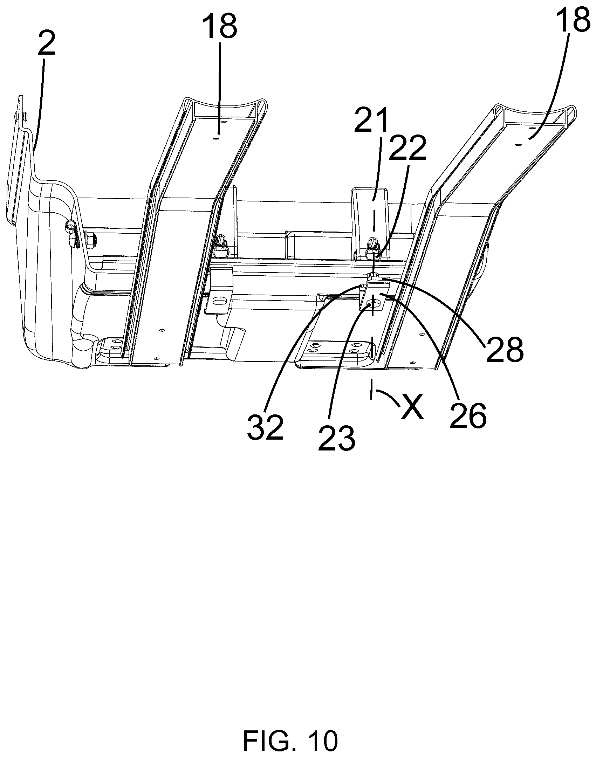

When the luggage box 1 should be dismounted from the load carrier 9, the clamping lever 21 can be moved relative to the elongated clamping pin 23 towards a release position, in which the clamping pin 23 extends at least substantially in the same direction as the clamping lever 21, which is shown in figures 9 and 10. In this situation, a contact surface 37 of the clamping lever 21 lies against the elongated metal sheet 34. The distance of the contact surface 37 to the rotation axis R is less than the distance of the clamping surface 33 to the rotation axis R, so that the support surface 32 gets out of contact from the bottom element 2 and the pressure surface 28 comes out of contact from the rail 18. In this way, the clamping lever can be rotated about the longitudinal axis X about an angle of 90°. In this way, the clamping element 26 no more overlaps with the rails 18, when seen from above, so that the luggage box 1 can be removed from the load carrier 9.

In order to further stabilize the fixation of the luggage box 1 at the rear load carrier 9, a holding arrangement 38 is provided. The holding arrangement 38 is designed such that it can be connected to the yoke 15 of the load carrier 9.

In concrete terms, the holding arrangement 38 comprises a base element 39, which is held at the sidewall 8 of the luggage box 1. In concrete terms, the base element 39 is held at a hinge joint 40 which connects the sidewall 8 and the cover element 3.

The base element 39 comprises a main section 41, which is attached to the sidewall 8, and an outer wall 42. A yoke receiving space 43 open towards the bottom to receive a yoke of a rear load carrier 9 is arranged between the main section 41 and the outer wall 42. The yoke receiving space 43 is limited upwardly by means of an upper bar 44 which connects the main section 41 and the outer wall 42. The yoke receiving space 43 extends through the entire base element 39 in a transverse direction.

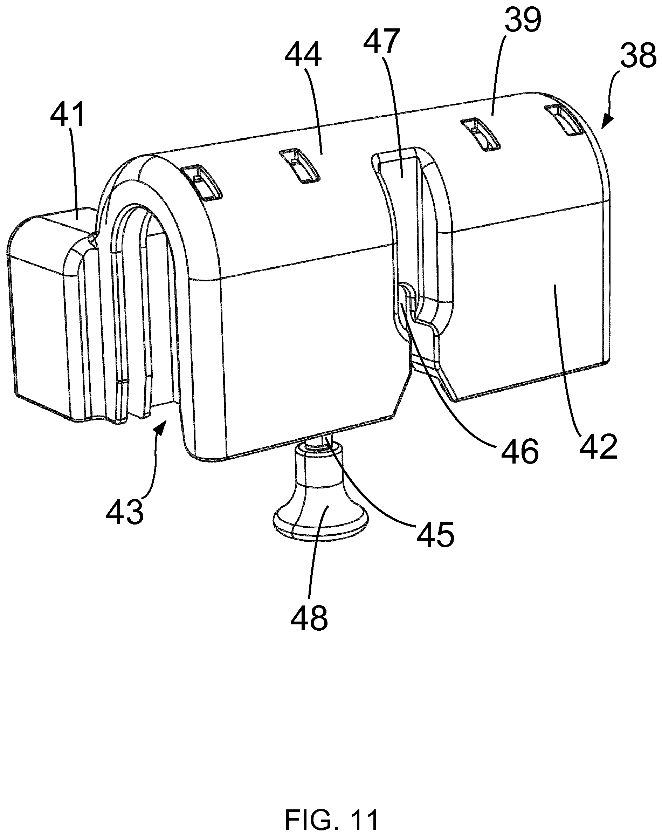

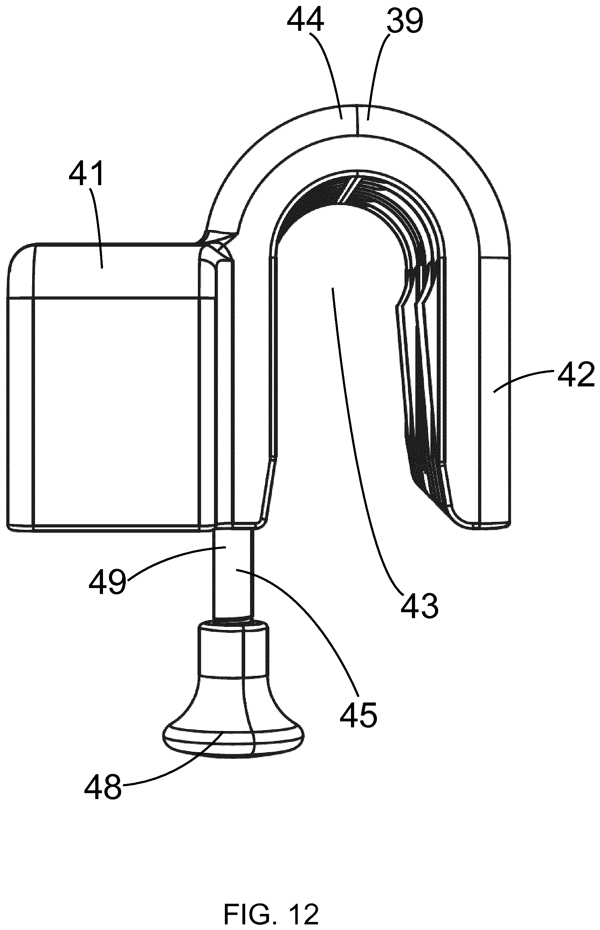

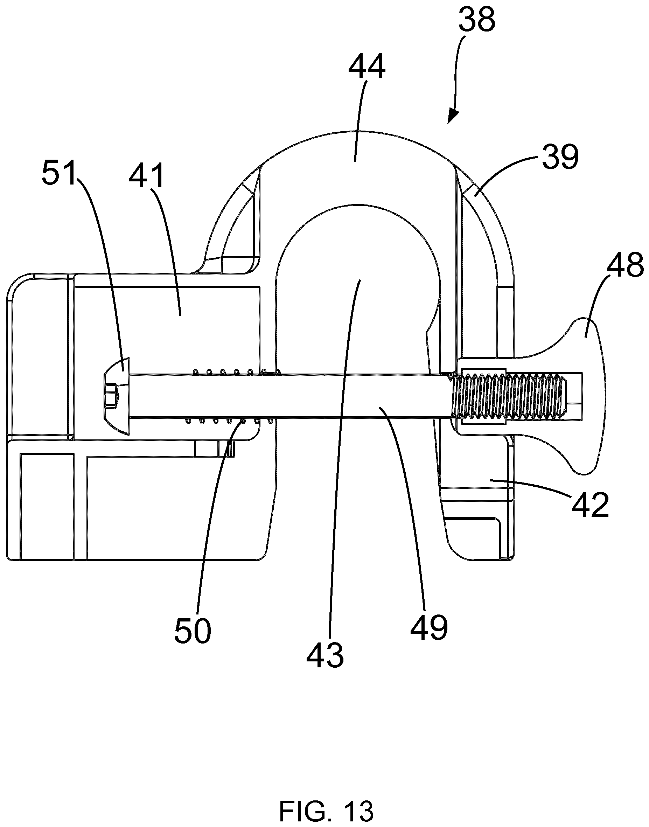

The holding arrangement 38 further comprises a securing element 45, which is held moveably at the base element 39 between a securing position and a release position. In the release position, which is shown in figures 11 and 12, the yoke 15 can be inserted into or removed out of the yoke receiving space 43. In the securing position, which is shown for example in figure 13, the yoke 15 inserted into the yoke receiving space 43 is fixed in a form-fit manner therein.

The securing element 45 is held at the main section 41. The outer wall 42 comprises a holding slit 46 extending in the vertical direction and open towards the bottom in order to move the securing element 45 between the securing position and the release position. The arrangement is such that the securing element 45 must be moved at first translationally out of its securing position before the securing element 45 can be pivoted into its release position. For this purpose, the base element 39 comprises a holding groove 47. This holding groove 47 extends vertically and is not open towards the bottom. The holding groove 47 extends on both lateral sides of the holding slit 46 and has a basically flat ground and parallel sidewalls. The securing element 45, which is formed as a securing pin, can engage into the holding groove 47 with an enlarged end section. This end section is formed by a knob 48, which is screwed on a screw 49, which is part of the securing element 45. Accordingly, in a first step, the securing element 45 must be moved translationally in a horizontal direction out of its securing position so that the knob 48 comes out of engagement from the holding groove 47. After that, the securing element 45 can be pivoted towards its release position.

In order to avoid an unintentional movement of the securing element 45 out of its securing position, the securing element 45 is biased towards its securing position by means of a coil spring 50, which supports against a head 51 of the securing element 45 arranged in the main section 41 of the base element 39 and against the base element 39.

The cover element 3 of the luggage box 1 can be pivoted relative to the sidewalls 8 between an opened position and a closed position, which is shown in the figures. For this purpose, a plurality of hinge joints 40 are connected to the cover element 3. In order to block the cover element 3 in its closed position, the luggage box 1 comprises blocking means. The blocking means comprise two locking belts 52 held at the sidewall 8 and, assigned to each locking belt 52, a counter belt 53 held at the cover element 3. Each locking belt 52 can be connected to the corresponding counter belt 53 by means of a snap fit connection 54.

### Reference Character List

| | | | |
|---|---|---|---|
| 1 | luggage box | 29 | end section |
| 2 | bottom element | 30 | first L-leg |
| 3 | cover element | 31 | second L-leg |
| 4 | bottom plate | 32 | support surface |
| 5 | circumferential border | 33 | clamping surface |
| 6 | cover plate | 34 | metal sheet |
| 7 | circumferential border | 35 | deepening |
| 8 | sidewall | 36 | through-opening |
| 9 | load carrier | 37 | contact surface |
| 10 | base body | 38 | holding arrangement |
| 11 | base profile | 39 | base element |
| 12 | central section | 40 | hinge joint |
| 13 | connecting device | 41 | main section |
| 14 | sliding profile | 42 | outer wall |
| 15 | yoke | 43 | receiving space |
| 16 | license plate holder | 44 | upper bar |
| 17 | rear light unit | 45 | securing element |
| 18 | rail | 46 | holding slit |
| 19 | wheelholder | 47 | holding groove |
| 20 | clamping device | 48 | knob |
| 21 | clamping lever | 49 | screw |
| 22 | pivot joint | 50 | coil spring |
| 23 | elongated clamping pin | 51 | head |
| 24 | through-slot | 52 | locking belt |
| 25 | flattening | 53 | counter belt |
| 26 | clamping element | 54 | snap fit connection |
| 27 | middle section | L | longitudinal direction |
| 28 | pressure surface | R | rotation axis |
| | | X | longitudinal axis |

## Claims

1. Clamping device (20) for bracing a load receiving device, in particular a luggage box (1), to a load carrier (9), in particular a bike carrier, said clamping device (20) comprising
a clamping lever (21);
a pivot joint (22), which is rotatably held at an end section (29) of the clamping lever (21) about a rotation axis (R);
an elongated clamping pin (23), which is fixed to the pivot joint (22) and extends perpendicularly to the rotation axis (R) of the pivot joint (22), the clamping pin defining a longitudinal axis (X);
a clamping element (26) fixed to the clamping pin at an end section thereof, wherein the clamping lever (21) has a clamping surface (33) and the clamping element (26) has a pressure surface (28), so that a load receiving device can be clamped to a load carrier (9) between the clamping surface (33) and the pressure surface (28);
wherein the pressure surface (28) is spaced apart from the clamping pin.

2. Clamping device (20) according to claim 1, **characterized in that** the pressure surface (28) is arranged at an end section of the clamping element (26), and/or **in that** the pressure surface (28) is elevated with respect to an adjacent section of the clamping element (26), and/or **in that** the pressure surface (28) extends at least substantially perpendicularly to the longitudinal axis (X), and/or **in that** the clamping element (26) is held in a rotationally fixed manner at the clamping pin (23).

3. Clamping device (20) according to claim 1 or 2 **characterized in that** the clamping element (26) comprises a support surface (32) to support the clamping element (26) against a load receiving device, wherein, in particular, the support surface (32) extends at least substantially perpendicularly to the longitudinal axis (X), and/or wherein, in particular, the support surface (32) is spaced apart from the clamping pin, and/or wherein, in particular, the support surface (32) is arranged on an opposite lateral side with respect to the clamping pin (23) of the pressure surface (28), wherein, preferably, the distance between the pressure surface (28) and the longitudinal axis (X) is at least two times and/or at most four times the distance between the support surface (32) and the longitudinal axis (X).

4. Clamping device (20) according to any of the preceding claims, **characterized in that** the clamping element (26) comprises a flat middle section (27) through which the clamping pin (23) extends, wherein, in particular, the clamping pin (23) penetrates longitudinally through the clamping element (26).

5. Clamping device (20) according to claim 4 and claim 3, **characterized in that,** at one end of the middle section (27), the pressure surface (28) is arranged, and at the other end of the middle section (27), the support surface (32) is arranged, wherein, in particular, at the other end of the middle section (27), an end section (29) extends upwards in the shape of an L, when seen from the lateral side, wherein, preferably, a first L-leg (30) extends upwards from the middle section (27) and a second L-leg (31) extends parallel to the middle section (27), wherein, particularly preferably, the upper side of the second L-leg (31) forms the support surface.

6. Clamping device (20) according to any of the preceding claims, **characterized in that** the clamping lever (21) is movable relative to the clamping pin (23) between a release position, in which the clamping pin (23) extends at least substantially in the same direction as the clamping lever (21), and a clamping position, in which the clamping pin (23) extends at least substantially perpendicularly to the direction of the clamping lever (21).

7. Clamping device (20) according to claim 6, **characterized in that** the clamping lever (21) comprises at the end section of the pivot joint (22) a through-slot (24) which divides the clamping lever (21) so that the elongated clamping pin (23) can rotate freely about the rotation axis (R) of the pivot joint (22) relative to the clamping lever (21), and/or **in that** the clamping lever (21) comprises a clamping surface (33), which extends parallel to the rotation axis (R) of the pivot joint (22) and is spaced apart from the pivot joint (22) such that the load receiving device and the load carrier (9) are pressed together between the pressure surface (28) and the clamping surface (33) when the clamping lever (21) is moved from its release position into a clamping position and the clamping surface (33) comes into contact with the corresponding holding surface of the load receiving device to be attached.

8. Luggage box (1), in particular for releasable attachment to a load carrier (9) to be mounted to a vehicle, the luggage box (1) comprising a rigid bottom element (2) and attachment means in order to attach the luggage box (1) releasably to the load carrier (9), wherein the attachment means comprise at least two, in particular four through- openings (36) formed in the bottom element (2), and at least two, in particular four clamping devices (20) according to any of claims 1 to 7.

9. Luggage box (1) according to claim 8, **characterized in that** the clamping pin (23) of each clamping device (20) extends through a through- opening (36) formed in the rigid bottom element (2), and/or **in that** adjacent to each through-opening (36), a deepening (35) is provided in the bottom of the luggage box (1), which receives the clamping lever (21) of the clamping device (20), when it is brought into its clamping position, and/or **in that** the luggage box (1) further comprises a rigid cover element (3) and sidewalls (8) connecting the bottom element (2) and the cover element (3), thus forming a luggage space inside.

10. Luggage box (1), in particular for a releasable attachment to a load carrier (9) to be mounted to a vehicle, the luggage box (1) comprising a rigid bottom element (2), a rigid cover element (3) and sidewalls (8) connecting the bottom element (2) and the cover element (3), thus forming a luggage space inside,
in particular according to claim 8 or 9,
wherein the luggage box (1) comprises a holding arrangement (38), which is designed such that it can be connected to a yoke (15) of a load carrier (9),
wherein the holding arrangement (38) comprises
a base element (39) held at the sidewall (8) or the cover element (3) and having a receiving space (43) open towards the bottom to receive a yoke (15) of a load carrier (9), and
a securing element (45), which is held movably at the base element (39) between a securing position, in which a yoke (15) inserted into the receiving space (43) is fixed in a form-fit manner therein, and a release position, in which the yoke (15) can be inserted into or removed out of the receiving space (43).

11. Luggage box (1) according to claim 10, **characterized in that** the base element (39) comprises a main section (41), which is attached to the sidewall (8) or to the cover element (3) of the luggage box (1), and an outer wall (42), wherein the receiving space (43) is arranged between the main section (41) and the outer wall (42), wherein, preferably, the receiving space (43) is limited upwardly by means of an upper bar (44), which connects the main section (41) and the outer wall (42).

12. Luggage box (1) according to claim 11, **characterized in that** the securing element (45) is held at the main section (41) and the outer wall (42) comprises a holding slit (46) extending in the vertical direction and open towards the bottom in order to move the securing element (45) between the securing position and the release position, wherein, in particular, the arrangement is such that the securing element (45) must be moved at first translationally out of its securing position before the securing element (45) can be pivoted into its release position, wherein, preferably, the base element (39) comprises a holding groove (47), which extends vertically and is not open towards the bottom, so that the securing element (45) can engage into the holding groove (47) with an enlarged end section in its securing position and so that the securing element (45) must be moved translationally in particular in a horizontal direction out of its securing position before the securing element (45) can be pivoted towards its release position.

13. Luggage box (1) according to any of claims 10 to 12, **characterized in that** the securing element (45) is biased towards its securing position, in particular by means of a spring element, preferably by means of a coil spring, which preferably supports against a head (51) of the securing element (45) arranged in the main section (41) of the base element (39) and against the base element (39).

14. Luggage box (1), in particular for a releasable attachment to a rear load carrier (9) to be mounted to a vehicle, the luggage box (1) comprising a rigid bottom element (2), a rigid cover element (3) and sidewalls (8) connecting the bottom element (2) and the cover element (3), thus forming a luggage space inside, in particular according to any of claims 8 to 13, wherein the cover element (3) can be moved, in particular pivoted, between an open state and a closed state, wherein the luggage box (1) comprises blocking means in order to block the cover element (3) in its closed state, wherein the blocking means comprise at least one locking belt (52), in particular two locking belts (52), held at the sidewall (8), in particular at a rear wall of the sidewall (8), and assigned to each locking belt (52) a counter belt (53) held at the cover element (3), and wherein each locking belt (52) can be connected to the corresponding counter belt (53) by means of a snap fit connection (54).

15. Luggage box (1) according to any of claims 9 to 14, **characterized in that** the sidewalls (8) of the luggage box (1) are made of fabric, and **in that** the luggage box (1) is foldable between use configuration, in which the bottom element (2) and the cover element (3) are spaced apart from one other and the sidewalls (8) connect the bottom element (2) and the cover element (3), thus forming a luggage space inside, and a transport configuration, in which the cover element (3) lies on the bottom element (2) and the sidewalls (8) are folded in between the cover element (3) and the bottom element (2).

16. System comprising a luggage box (1) according to claim 8 or 9 and a load carrier (9), in particular a bike carrier, wherein the load carrier (9) defines a longitudinal direction (L) and comprises at least two, in particular exactly two rails (18) extending in a transverse direction for receiving a load, in particular at least one bike, on the load carrier (9), wherein the arrangement is such that the luggage box (1) can be attached to the load carrier (9) in such a way that the bottom element (2) of the luggage box (1) is positioned on the rails (18) and the pressure surface (28) of the clamping elements (26) abuts from below against the rails (18) in order to brace the luggage box (1) against the rails (18) of the load carrier (9).

## Amended claims

### Amended claims in accordance with Rule 137(2) EPC.

1. Clamping device (20) for bracing a load receiving device, in particular a luggage box (1), to a load carrier (9), in particular a bike carrier, said clamping device (20) comprising
a clamping lever (21);
a pivot joint (22), which is rotatably held at an end section (29) of the clamping lever (21) about a rotation axis (R);
an elongated clamping pin (23), which is fixed to the pivot joint (22) and extends perpendicularly to the rotation axis (R) of the pivot joint (22), the clamping pin defining a longitudinal axis (X);
a clamping element (26) fixed to the clamping pin at an end section thereof, wherein the clamping lever (21) has a clamping surface (33) and the clamping element (26) has a pressure surface (28), so that a load receiving device can be clamped to a load carrier (9) between the clamping surface (33) and the pressure surface (28);
wherein the pressure surface (28) is spaced apart from the clamping pin,
**characterized in that** the clamping element (26) comprises a support surface (32) to support the clamping element (26) against a load receiving device.

2. Clamping device (20) according to claim 1, **characterized in that** the pressure surface (28) is arranged at an end section of the clamping element (26), and/or **in that** the pressure surface (28) is elevated with respect to an adjacent section of the clamping element (26), and/or **in that** the pressure surface (28) extends at least substantially perpendicularly to the longitudinal axis (X), and/or **in that** the clamping element (26) is held in a rotationally fixed manner at the clamping pin (23).

3. Clamping device (20) according to claim 1 or 2 **characterized in that** the support surface (32) extends at least substantially perpendicularly to the longitudinal axis (X), and/or **in that**, the support surface (32) is spaced apart from the clamping pin, and/or **in that**, the support surface (32) is arranged on an opposite lateral side with respect to the clamping pin (23) of the pressure surface (28), wherein, preferably, the distance between the pressure surface (28) and the longitudinal axis (X) is at least two times and/or at most four times the distance between the support surface (32) and the longitudinal axis (X).

4. Clamping device (20) according to any of the preceding claims, **characterized in that** the clamping element (26) comprises a flat middle section (27) through which the clamping pin (23) extends, wherein, in particular, the clamping pin (23) penetrates longitudinally through the clamping element (26).

5. Clamping device (20) according to claim 4 and claim 3, **characterized in that**, at one end of the middle section (27), the pressure surface (28) is arranged, and at the other end of the middle section (27), the support surface (32) is arranged, wherein, in particular, at the other end of the middle section (27), an end section (29) extends upwards in the shape of an L, when seen from the lateral side, wherein, preferably, a first L-leg (30) extends upwards from the middle section (27) and a second L-leg (31) extends parallel to the middle section (27), wherein, particularly preferably, the upper side of the second L-leg (31) forms the support surface.

6. Clamping device (20) according to any of the preceding claims, **characterized in that** the clamping lever (21) is movable relative to the clamping pin (23) between a release position, in which the clamping pin (23) extends at least substantially in the same direction as the clamping lever (21), and a clamping position, in which the clamping pin (23) extends at least substantially perpendicularly to the direction of the clamping lever (21).

7. Clamping device (20) according to claim 6, **characterized in that** the clamping lever (21) comprises at the end section of the pivot joint (22) a through-slot (24) which divides the clamping lever (21) so that the elongated clamping pin (23) can rotate freely about the rotation axis (R) of the pivot joint (22) relative to the clamping lever (21), and/or **in that** the clamping lever (21) comprises a clamping surface (33), which extends parallel to the rotation axis (R) of the pivot joint (22) and is spaced apart from the pivot joint (22) such that the load receiving device and the load carrier (9) are pressed together between the pressure surface (28) and the clamping surface (33) when the clamping lever (21) is moved from its release position into a clamping position and the clamping surface (33) comes into contact with the corresponding holding surface of the load receiving device to be attached.

8. Luggage box (1), in particular for releasable attachment to a load carrier (9) to be mounted to a vehicle, the luggage box (1) comprising a rigid bottom element (2) and attachment means in order to attach the luggage box (1) releasably to the load carrier (9), wherein the attachment means comprise at least two, in particular four through- openings (36) formed in the bottom element (2), and at least two, in particular four clamping devices (20) according to any of claims 1 to 7.

9. Luggage box (1) according to claim 8, **characterized in that** the clamping pin (23) of each clamping device (20) extends through a through-opening (36) formed in the rigid bottom element (2), and/or **in that** adjacent to each through-opening (36), a deepening (35) is provided in the bottom of the luggage box (1), which receives the clamping lever (21) of the clamping device (20), when it is brought into its clamping position, and/or **in that** the luggage box (1) further comprises a rigid cover element (3) and sidewalls (8) connecting the bottom element (2) and the cover element (3), thus forming a luggage space inside.

10. Luggage box (1), in particular for a releasable attachment to a load carrier (9) to be mounted to a vehicle, the luggage box (1) comprising a rigid bottom element (2), a rigid cover element (3) and sidewalls (8) connecting the bottom element (2) and the cover element (3), thus forming a luggage space inside,
in particular according to claim 8 or 9,
wherein the luggage box (1) comprises a holding arrangement (38), which is designed such that it can be connected to a yoke (15) of a load carrier (9),
wherein the holding arrangement (38) comprises
a base element (39) held at the sidewall (8) or the cover element (3) and having a receiving space (43) open towards the bottom to receive a yoke (15) of a load carrier (9), and
a securing element (45), which is held movably at the base element (39) between a securing position, in which a yoke (15) inserted into the receiving space (43) is fixed in a form-fit manner therein, and a release position, in which the yoke (15) can be inserted into or removed out of the receiving space (43).

11. Luggage box (1) according to claim 10, **characterized in that** the base element (39) comprises a main section (41), which is attached to the sidewall (8) or to the cover element (3) of the luggage box (1), and an outer wall (42), wherein the receiving space (43) is arranged between the main section (41) and the outer wall (42), wherein, preferably, the receiving space (43) is limited upwardly by means of an upper bar (44), which connects the main section (41) and the outer wall (42).

12. Luggage box (1) according to claim 11, **characterized in that** the securing element (45) is held at the main section (41) and the outer wall (42) comprises a holding slit (46) extending in the vertical direction and open towards the bottom in order to move the securing element (45) between the securing position and the release position, wherein, in particular, the arrangement is such that the securing element (45) must be moved at first translationally out of its securing position before the securing element (45) can be pivoted into its release position, wherein, preferably, the base element (39) comprises a holding groove (47), which extends vertically and is not open towards the bottom, so that the securing element (45) can engage into the holding groove (47) with an enlarged end section in its securing position and so that the securing element (45) must be moved translationally in particular in a horizontal direction out of its securing position before the securing element (45) can be pivoted towards its release position.

13. Luggage box (1) according to any of claims 10 to 12, **characterized in that** the securing element (45) is biased towards its securing position, in particular by means of a spring element, preferably by means of a coil spring, which preferably supports against a head (51) of the securing element (45) arranged in the main section (41) of the base element (39) and against the base element (39).

14. Luggage box (1), in particular for a releasable attachment to a rear load carrier (9) to be mounted to a vehicle, the luggage box (1) comprising a rigid bottom element (2), a rigid cover element (3) and sidewalls (8) connecting the bottom element (2) and the cover element (3), thus forming a luggage space inside, in particular according to any of claims 8 to 13, wherein the cover element (3) can be moved, in particular pivoted, between an open state and a closed state, wherein the luggage box (1) comprises blocking means in order to block the cover element (3) in its closed state, wherein the blocking means comprise at least one locking belt (52), in particular two locking belts (52), held at the sidewall (8), in particular at a rear wall of the sidewall (8), and assigned to each locking belt (52) a counter belt (53) held at the cover element (3), and wherein each locking belt (52) can be connected to the corresponding counter belt (53) by means of a snap fit connection (54).

15. Luggage box (1) according to any of claims 9 to 14, **characterized in that** the sidewalls (8) of the luggage box (1) are made of fabric, and **in that** the luggage box (1) is foldable between use configuration, in which the bottom element (2) and the cover element (3) are spaced apart from one other and the sidewalls (8) connect the bottom element (2) and the cover element (3), thus forming a luggage space inside, and a transport configuration, in which the cover element (3) lies on the bottom element (2) and the sidewalls (8) are folded in between the cover element (3) and the bottom element (2).

16. System comprising a luggage box (1) according to claim 8 or 9 and a load carrier (9), in particular a bike carrier, wherein the load carrier (9) defines a longitudinal direction (L) and comprises at least two, in particular exactly two rails (18) extending in a transverse direction for receiving a load, in particular at least one bike, on the load carrier (9), wherein the arrangement is such that the luggage box (1) can be attached to the load carrier (9) in such a way that the bottom element (2) of the luggage box (1) is positioned on the rails (18) and the pressure surface (28) of the clamping elements (26) abuts from below against the rails (18) in order to brace the luggage box (1) against the rails (18) of the load carrier (9).
